# EUROPÄISCHE PATENTSCHRIFT

(11) **EP 3 587 894 B1**
(45) Veröffentlichungstag und Bekanntmachung des Hinweises auf die Patenterteilung: **09.08.2023**
(21) Anmeldenummer: 18180530.0
(22) Anmeldetag: 28.06.2018
(51) Int. Cl.: F16P 3/14, G01S 17/02, B66F 9/06, B66F 9/075, G01S 17/06, G01S 17/42, G01S 17/93, G01S 7/481, G01V 8/10

(54) **SENSORANORDNUNG UND VERFAHREN ZUM BETRIEB EINER SENSORANORDNUNG**
SENSOR ASSEMBLY AND METHOD FOR OPERATING A SENSOR ASSEMBLY
AGENCEMENT DE CAPTEURS ET PROCÉDÉ DE FONCTIONNEMENT D'UN AGENCEMENT DE CAPTEURS

(43) Veröffentlichungstag der Anmeldung: 01.01.2020
(73) Patentinhaber: Leuze electronic GmbH + Co. KG, 73277 Owen/Teck (DE)
(72) Erfinder: Feller, Bernhard, 86316 Friedberg (DE); Wursthorn, Viktor, 72636 Frickenhausen (DE)
(74) Vertreter: Ruckh, Rainer Gerhard

(56) Entgegenhaltungen:
- EP-A1- 3 312 131
- US-A- 6 121 872
- US-A1- 2011 153 139

## Beschreibung

Die Erfindung betrifft eine Sensoranordnung gemäß dem Oberbegriff des Anspruchs 1 sowie ein Verfahren zum Betrieb einer solchen Sensoranordnung.

Derartige Sensoranordnungen werden zur Absicherung von Gefahrenbereichen an Fahrzeugen eingesetzt. Die Sensoranordnung erfüllt dabei vorteilhaft die Sicherheitsanforderungen für den Einsatz im Bereich der Sicherheitstechnik.

Die mit der Sensoranordnung gesicherten Fahrzeuge können insbesondere als fahrerloses Transportsysteme ausgebildet sein, die allgemein zum Transport von Gütern eingesetzt werden. Mit der Sensoranordnung wird ein Gefahrenbereich, insbesondere im Vorfeld dadurch abgesichert, dass mit der Sensoranordnung ein diesen Gefahrenbereich zumindest teilweise abdeckendes Schutzfeld überwacht wird. Hierzu weist die Sensoranordnung vorteilhaft einen optischen Sensor auf, der in Form eines Flächendistanzsensors, das heißt eines scannenden Distanzsensors ausgebildet sein kann.

Abhängig von Objektdetektionen im Schutzfeld generiert der optische Sensor ein binäres Schaltsignal, dessen erster Schaltzustand ein Sicherheitssignal und dessen zweiter Schaltzustand ein Freigabesignal ist. Wird mit dem optischen Sensor kein Objekt im Schutzfeld detektiert, generiert dieser ein Freigabesignal, so dass sich das Fahrzeug ungehindert weiterbewegen kann. Wird jedoch mit dem optischen Sensor ein Objekteingriff im Schutzfeld generiert, generiert der optische Sensor ein Sicherheitssignal, das insbesondere ein Haltsignal oder ein Bremssignal für das Fahrzeug ist.

Damit wird eine Sicherheitsfunktion derart realisiert, dass dann, wenn zum Beispiel eine Person in den mit dem Schutzfeld überwachten Gefahrenbereich eintritt, das Fahrzeug sofort anhält oder wenigstens abbremst, wodurch Gefährdungen für die Person ausgeschlossen werden.

Die Fahrbahn des Fahrzeugs ist üblicherweise durch Fahrbahnbegrenzungen begrenzt, beispielsweise durch Maschinen oder Anlagen. Bei Richtungsänderungen des Fahrzeugs kann eine solche Fahrbahnbegrenzung in das Schutzfeld ragen. Dies wird vom optischen Sensor als Objekteingriff gewertet, wodurch das Sicherheitssignal generiert wird. Das dadurch bedingte Anhalten oder Abbremsen des Fahrzeugs ist jedoch unnötig, da diese Fahrbahnbegrenzung keinen gefahrbringenden Eingriff darstellt.

Um ein derartiges unnötiges Anhalten oder Abbremsen zu vermeiden, ist es bekannt, das Schutzfeld an die aktuelle Fahrtrichtung des Fahrzeugs beziehungsweise an die Umgebung anzupassen.

Dieses Verfahren stößt insbesondere dann an seine Grenzen, wenn die Fahrbahn nur aus einem schmalen Gang besteht, der beidseitig von Fahrbahnbegrenzungen begrenzt ist und der nur wenig breiter ist als das Fahrzeug selbst.

Solche Anordnungen finden sich insbesondere in Lagersystemen, in welchen beidseitig eines Gangs Lagerplätze, insbesondere Regale vorgesehen sind, welche von Fahrzeugen wie Schmalgang-Staplern angefahren werden.

Zur Überwachung des Gefahrenbereichs ist ein Schutzfeld vorgesehen, das an die Abmessungen, insbesondere die Breite des Gangs, angepasst ist. Jedoch führen bereits kleine Pendelbewegungen des Fahrzeugs bezüglich seiner Längsachse dazu, dass eine Fahrbahnbegrenzung in das Schutzfeld ragt und so zu einem unnötigen Anhalten oder Abbremsen des Fahrzeugs führt.

Um dieses Problem zu lösen ist versucht worden, mit dem optischen Sensor die Fahrbahnbegrenzung fortlaufend zu erfassen, um abhängig hiervon das Schutzfeld optimal so zu dimensionieren, dass mit dem Schutzfeld zwar der Gang, nicht aber die Fahrbahnbegrenzung erfasst wird.

Dieses Verfahren ist jedoch äußerst aufwändig, da die fortlaufende Erfassung der Fahrbahnbegrenzung komplex ist. Darüber hinaus ergibt sich als weiteres Problem, dass eine schnelle Erfassung der Fahrbahnbegrenzung erforderlich ist, um dementsprechend schnell das Schutzfeld daran anzupassen. Dies erfordert eine hohe Rechnerleistung bei der Auswertung der Messwerte des optischen Sensors, die oft nicht zur Verfügung steht.

Die US 2011/0153139 A1 betrifft einen optoelektronischen Sensor, insbesondere Laserscanner, für ein Fahrzeug, das sich auf einer zu beiden Seiten begrenzten Fahrbahn bewegt. Der Sensor weist einen Lichtempfänger zur Umwandlung von Empfangslicht in elektrische Signale sowie eine Auswertungseinheit auf, die dafür ausgebildet ist, aus den elektrischen Signalen die Position von Objekten in einem Überwachungsbereich des Sensors zu ermitteln und zu erkennen, ob sich ein unzulässiges Objekt innerhalb eines in Lage und/oder Ausdehnung dynamisch veränderlichen Schutzfeldes befindet, wobei ein sicherer Ausgang vorgesehen ist, über den von der Auswertungseinheit bei Erkennung eines Schutzfeldeingriffs ein Halte- oder Bremssignal an das Fahrzeug ausgebbar ist, Die Auswertungseinheit ist weiterhin dafür ausgebildet, aus den elektrischen Signalen Begrenzungen der Fahrbahn zu erkennen und das Schutzfeld dynamisch in die Begrenzungen einzupassen. Dabei weist das Schutzfeld eine von der Geschwindigkeit des Fahrzeugs abhängige Längsausdehnung annähernd in Fahrrichtung und eine vorgegebene, an Fahrzeug und/oder Fahrbahn angepasste Querausdehnung auf. Aus der EP 3 312 131 A ist ebenfalls ein gattungsgemäßer Sensor bekannt.

Der Erfindung liegt die Aufgabe zugrunde, eine Sensoranordnung und ein Verfahren bereitzustellen, mittels derer eine sichere Überwachung eines Gefahrenbereichs eines Fahrzeugs bei hoher Verfügbarkeit des Fahrzeugs gewährleistet ist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem optischen Sensor zur Überwachung eines Gefahrenbereichs an einem Fahrzeug, welches entlang einer zur beiden Seiten jeweils durch eine Fahrbahnbegrenzung begrenzten Fahrbahn bewegt ist. Der optische Sensor ist ausgebildet, Objekte in wenigstens einem Schutzfeld zu erfassen und abhängig hiervon ein binäres Schaltsignal zu generieren, dessen Schaltzustände einerseits ein Sicherheitssignal und andererseits ein Freigabesignal für das Fahrzeug sind. Mehrere gleichzeitig aktivierte Schutzfelder sind vorgesehen sind. In jedem aktivierten Schutzfeld erfolgt mittels des optischen Sensors eine Objektdetektion. In einer Auswerteeinheit des optischen Sensors ist eine Auswahllogik vorgesehen, in welcher wenigstens ein aktiviertes Schutzfeld ausgewählt wird. Nur in Abhängigkeit einer Objekterkennung in dem wenigstens einen ausgewählten Schutzfeld wird das Sicherheitssignal generiert.

Die Erfindung betrifft weiterhin ein entsprechendes Verfahren.

Mit der erfindungsgemäßen Sensoranordnung beziehungsweise mit dem erfindungsgemäßen Verfahren wird einerseits eine sichere Erfassung von Objekten im Gefahrenbereich, der insbesondere vom Vorfeld des Fahrzeugs gebildet ist, insbesondere eines fahrerlosen Transportsystems, ermöglicht. Dadurch wird eine Sicherheitsfunktion derart bereitgestellt, dass für in den Gefahrenbereich eindringenden Personen oder Objekten keine Gefährdung zu befürchten ist.

Die Sicherheitsfunktion ist dabei derart realisiert, dass ein Eindringen der Person oder des Objekts in den Gefahrenbereich sicher erkannt wird, wodurch der optische Sensor ein Sicherheitssignal generiert, das insbesondere als Haltsignal oder Bremssignal ausgebildet ist.

Der hierzu eingesetzte optische Sensor ist dabei vorzugsweise als Sicherheitssensor ausgebildet, das heißt er weist einen fehlersicheren Aufbau auf, der die Anforderungen der relevanten Sicherheitsnormen erfüllt.

Ein wesentlicher Vorteil der Erfindung besteht darin, dass Detektionen der Fahrbahnbegrenzung durch den optischen Sensor nicht zur Generierung eines Sicherheitssignals und somit nicht zu einem unnötigen Anhalten oder Abbremsen des Fahrzeugs führen, wodurch die Verfügbarkeit des Fahrzeugs nicht unnötig eingeschränkt wird.

Dieser Vorteil wird insbesondere auch dann erzielt, wenn es sich bei der Fahrbahn um einen engen, beidseitig begrenzten Gang handelt, der beidseitig von Fahrbahnbegrenzungen begrenzt ist und dessen Breite nur geringfügig größer als die Fahrzeugbreite ist.

Diese Vorteile werden auf überraschend einfache Weise dadurch erzielt, dass mit dem optischen Sensor nicht nur ein Schutzfeld überwacht wird. Vielmehr sind mehrere Schutzfelder gleichzeitig aktiviert, so dass alle Schutzfelder simultan auf eventuelle Objekteingriffe geprüft werden. In der erfindungsgemäßen Auswahllogik werden dann aus den aktivierten Schutzfeldern ein oder mehrere Schutzfelder ausgewählt, wobei nur abhängig davon, ob Objekteingriffe in den ausgewählten Schutzfeldern vorhanden sind oder nicht ein Sicherheitssignal oder ein Freigabesignal generiert wird.

Zunächst erscheint das erfindungsgemäße Verfahren komplizierter als die bekannte Überwachung des Gefahrenbereichs mit nur einem Schutzfeld, dessen Kontur fortlaufend an die Fahrbahnbegrenzung angepasst wird. Jedoch ist eine solche Anpassung des Schutzfeldes äußerst aufwändig und insbesondere bei sich schnell verändernden Umgebungsbedingungen problematisch. Dies gilt insbesondere dann, wenn das Fahrzeug entlang einer Fahrbahn bewegt wird, die von einem engen Gang zwischen zwei Fahrbahnbegrenzungen gebildet ist. Dann führen unvermeidliche Schlingerbewegungen des Fahrzeugs dazu, dass Randbereiche der Fahrbahnbegrenzung in das Schutzfeld ragen.

Diese Problematik wird bei der erfindungsgemäßen Sensoranordnung beziehungsweise bei dem erfindungsgemäßen Verfahren dadurch gelöst, dass gleichzeitig in mehreren aktivierten Schutzfeldern eine Objektdetektion erfolgt. Entscheidend hierbei ist, dass die einzelnen Schutzfelder nicht optimal an die Fahrbahn und deren Begrenzungen angepasst sein müssen. Vielmehr ist es sogar zulässig, dass in einige der aktivierten Schutzfelder die Fahrbahnbegrenzungen ragen. Damit entfällt die aufwändige fortlaufende Neuberechnung der Schutzfelder derart, dass diese zwar die Fahrbahn möglichst vollständig abgleichen, jedoch keine Fahrbahnbegrenzung in diese ragen dürfen.

Mit der Auswahllogik werden dann die Schutzfelder ausgewählt und extrahiert, die für die Gefahrenbereich-Überwachung relevant sind. Durch geeignete Logikverknüpfungen, insbesondere von Objektdetektionen in ausgewählten Schutzfeldern, können dann Einflüsse der Fahrbahnbegrenzungen bei der Objektdetektion sicher eliminiert werden. Somit kann, ohne die Schutzfelder fortlaufend an die Fahrbahnbegrenzungen anpassen zu müssen, mit der erfindungsgemäßen Auswahllogik eine Objekterkennung nur im Gefahrenbereich und damit ohne störende Einflüsse der Fahrbahnbegrenzungen durchgeführt werden.

Damit werden einerseits Objekte und Personen sicher im Gefahrenbereich erkannt, wodurch der optische Sensor ein Sicherheitssignal generiert und damit die Sicherheitsfunktion der Sensoranordnung gewährleistet ist. Andererseits wird eine unnötige Generierung eines Sicherheitssignals durch Detektionen der Fahrbahnbegrenzungen vermieden, wodurch ein unnötiges Anhalten oder Abbremsen des Fahrzeugs vermieden wird und damit dessen Verfügbarkeit erhöht wird.

Gemäß einer vorteilhaften Ausführungsform sind eines oder mehrere aktivierte Schutzfelder an die Fahrbahn angepasst.

Dabei können mit dem optischen Sensor Messwerte von den Fahrbahnbegrenzungen gewonnen werden, wobei die aktivierten Schutzfelder abhängig von den Messwerten sind.

Weiterhin können die aktivierten Schutzfelder abhängig vom Beladungszustand und/oder der Geschwindigkeit des Fahrzeugs sein.

Die Vorgabe der aktivierten Schutzfelder kann dabei von einer externen Einheit, beispielsweise der Steuerung des Fahrzeugs, erfolgen.

Wesentlich ist, dass die aktivierten Schutzfelder nicht exakt und insbesondere nicht fortlaufend an die aktuelle Fahrsituation des Fahrzeugs angepasst werden müssen.

Die einzelnen aktivierten Schutzfelder müssen lediglich grob an die Fahrbahnbegrenzung und damit an den Gefahrenbereich am Fahrzeug angepasst sein. Dabei sind verschiedene Geometrien und Anordnungen von aktivierten Schutzfeldem möglich. Dabei können sich aktivierte Schutzfelder auch teilweise überlappen.

Insbesondere sind eines oder mehrere aktivierte Schutzfelder als Teilschutzfelder ausgebildet, die sich nur über einen Teilwinkelbereich der Fahrbahn erstrecken.

Gemäß einer vorteilhaften Ausführungsform generiert der optische Sensor ein Freigabesignal, falls in wenigstens einem ausgewählten Schutzfeld kein Objekteingriff vorliegt.

In diesem Fall sind die aktivierten Schutzfelder so an die möglichen Fahrzeugbewegungen angepasst, dass für jeden möglichen Bewegungszustand jeweils wenigstens ein aktiviertes Schutzfeld vorhanden ist, in welches keine Fahrbahnbegrenzung ragt, so dass mit diesem nur der Gefahrenbereich erfasst wird.

Bewegt sich beispielsweise das Fahrzeug in einem engen geradlinig verlaufenden Gang, der beidseitig von Fahrbahnbegrenzungen begrenzt ist, so kann der geradlinigen Transportbewegung des Fahrzeugs allenfalls noch eine Schlingerbewegung, das heißt Pendelbewegung bezüglich seiner Längsachse überlagert sein.

Daran angepasst sind mehrere fächerförmig angeordnete, teilweise überlappende aktivierte Schutzfelder vorgesehen, von denen einige nur über den linken Fahrzeugrand und einige andere nur über den rechten Fahrzeugrand hervorstehen. Durch die Wahl aktivierter Schutzfelder ist für jede Fahrzeugposition sichergestellt, dass wenigstens ein Schutzfeld nur den Gefahrenbereich umfasst und nicht Teile der Fahrbahnbegrenzung.

Mit der Auswahllogik derart, dass der optische Sensor nur dann ein Freigabesignal generiert, falls in wenigstens einem ausgewählten Schutzfeld kein Objekteingriff vorliegt, wird eine besonders einfache und sichere Gefahrenbereich-Überwachung ermöglicht.

Für die Generierung des Freigabesignals ist nur erforderlich, dass in dem wenigstens einen ausgewählten Schutzfeld kein Objekt detektiert wird. Durch diese Auswahl werden alle Schutzfelder, in welchen gegebenenfalls von den Fahrbahnbegrenzungen stammende Objekteingriffe registriert werden, verworfen. Umgekehrt wird dann, wenn in allen aktivierten Schutzfeldern Objekteingriffe registriert werden, das Sicherheitssignal erzeugt, was eine sichere und zuverlässige Reaktion auf ein Eindringen eines Objekts oder Person in den Gefahrenbereich darstellt. Dies beruht darauf, dass die Schutzfelder so gewählt sind, dass bei jeder Fahrzeugposition ein Schutzfeld ausschließlich den Gefahrenbereich erfasst. Somit können, ohne die Kontur von Schutzfeldern fortlaufend zur Aussparung der Fahrbahnbegrenzung anpassen zu müssen, von der Fahrbahnbegrenzung stammende Messwerte sicher eliminiert werden, wodurch eine Gefahrenbereich-Überwachung ohne störende Einflüsse der Fahrbahnbegrenzung ermöglicht wird.

Gemäß einer vorteilhaften Variante der Erfindung werden mehrere aktivierte Schutzfelder zu mehreren Logik-Schutzfeldern dadurch verknüpft, dass Objekterkennungen in diesen aktivierten Schutzfeldern miteinander verknüpft werden, wobei durch die logischen Verknüpfungen ermittelt wird, ob ein Objekteingriff in einem oder mehreren Logik-Schutzfeldern vorhanden ist oder nicht.

Dann, wenn für das oder wenigstens ein Logik-Schutzfeld kein Objekteingriff vorliegt, generiert der optische Sensor ein Freigabesignal.

In diesem Fall erfolgt eine Verknüpfung von einzelnen aktivierten Schutzfeldern, die vorteilhaft als Teilschutzfelder ausgebildet sind, zu einem ausgewählten Schutzfeld entsprechenden Logik-Schutzfeld. Dadurch können aus geometrisch einfachen Schutzfeldern, insbesondere Teilschutzfeldern, komplexe, an die Fahrzeugbewegung angepasste Logik-Schutzfelder aufgebaut werden.

Wenigstens ein Logik-Schutzfeld von mehreren Logik-Schutzfeldern ist wieder so dimensioniert, dass in diesem unabhängig von der aktuellen Fahrzeugposition nur der Gefahrenbereich nicht aber die Fahrbahnbegrenzung erfasst werden.

Die Auswahllogik ist dann wieder derart, dass das Freigabesignal vom optischen Sensor nur dann generiert wird, wenn in wenigstens einem Logik-Schutzfeld kein Objekt detektiert wird. Dagegen erfolgt die Generierung des Sicherheitssignals nur dann, wenn in allen Logik-Schutzfeldern ein Objekteingriff registriert wird.

Gemäß einer konstruktiv vorteilhaften Ausgestaltung ist der optische Sensor ein Flächendistanzsensor.

Ein derartiger Flächendistanzsensor weist einen Distanzsensor auf, welcher Lichtstrahlen emittiert, die periodisch einen flächigen Überwachungsbereich überstreichen. Mit einem derartigen Flächendistanzsensor kann in einem Schutzfeld die Position eines Objekts bestimmt werden.

Die Erfindung wird im Folgenden anhand der Zeichnungen erläutert. Es zeigen:
- Figur 1: Erstes Ausführungsbeispiel eines optischen Sensors für die erfindungsgemäße Sensoranordnung.
- Figur 2: Zweites Ausführungsbeispiel eines optischen Sensors für die erfindungsgemäße Sensoranordnung.
- Figur 3: Schematische Darstellung eines in einem Gang bewegten und mit einem optischen Sensor überwachten Fahrzeug.
- Figur 4: Erstes Ausführungsbeispiel einer Gefahrenbereich-Überwachung für das Fahrzeug gemäß Figur 3.
- Figur 5: Zweites Ausführungsbeispiel einer Gefahrenbereich-Überwachung für das Fahrzeug gemäß Figur 4.

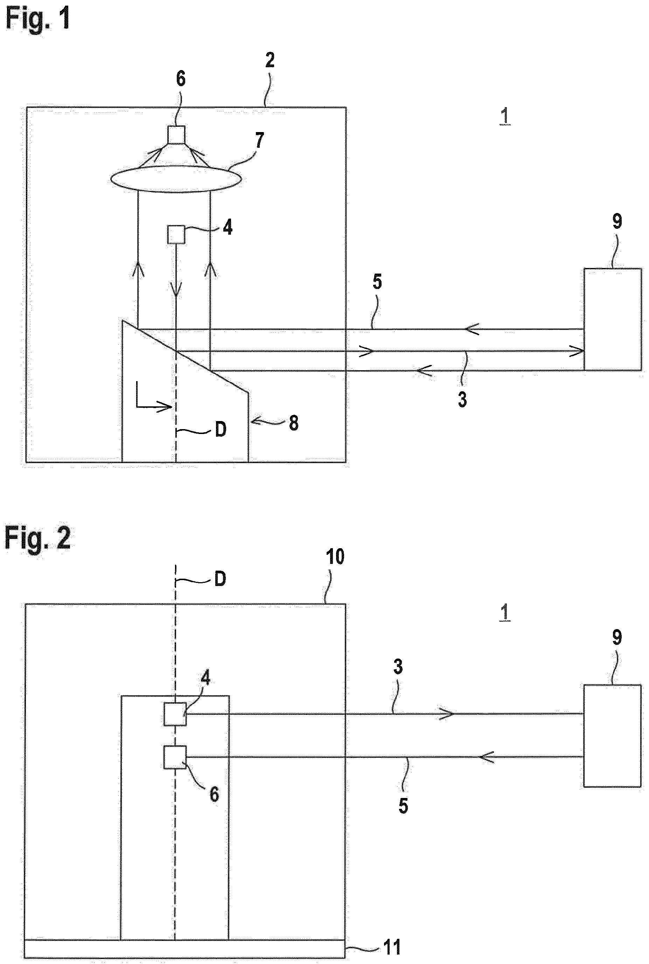

Figur 1 zeigt ein erstes Ausführungsbeispiel eines erfindungsgemäßen optischen Sensors 1 in Form eines Flächendistanzsensors. Die Komponenten des optischen Sensors 1 sind in einem feststehenden Gehäuse 2 integriert. Der optische Sensor 1 weist einen Sendelichtstrahlen 3 emittierenden Sender 4 und einen Empfangslichtstrahlen 5 empfangenden Empfänger 6 auf, welche einen Distanzsensor bilden. Die Distanzmessungen erfolgen vorteilhaft nach einem Puls-Laufzeit-Verfahren. Der Sender 4, der Empfänger 6 und eine diesen vorgeordnete Empfangsoptik 7 sind einer um eine Drehachse D rotierenden Ablenkeinheit 8 zugeordnet. Dadurch werden die Sendelichtstrahlen 3 periodisch innerhalb eines Abtastbereichs abgelenkt, um dort vorhandene Gegenstände 9 zu detektieren. Durch die Distanzmessungen und durch eine Erfassung der Ablenkposition der Ablenkeinheit 8 werden die Positionen des Gegenstandes 9 bestimmt.

Figur 2 zeigt eine Variante des optischen Sensors 1 gemäß Figur 1. In diesem Fall sind der Sender 4 und Empfänger 6 in einem um eine Drehachse D rotierenden Meßkopf 10 gelagert, der auf einem feststehenden Sockel 11 aufsitzt.

Der optische Sensor 1 gemäß Figur 1 beziehungsweise Figur 2 weist zur Auswertung der im Empfänger 6 generierten Empfangssignale eine Auswerteeinheit auf. Der optische Sensor 1 ist als Sicherheitssensor ausgebildet und weist daher einen fehlersicheren Aufbau auf. Hierzu weist die Auswerteeinheit einen redundanten Aufbau auf, insbesondere in Form zweier sich gegenseitig zyklisch überwachenden Rechnereinheiten.

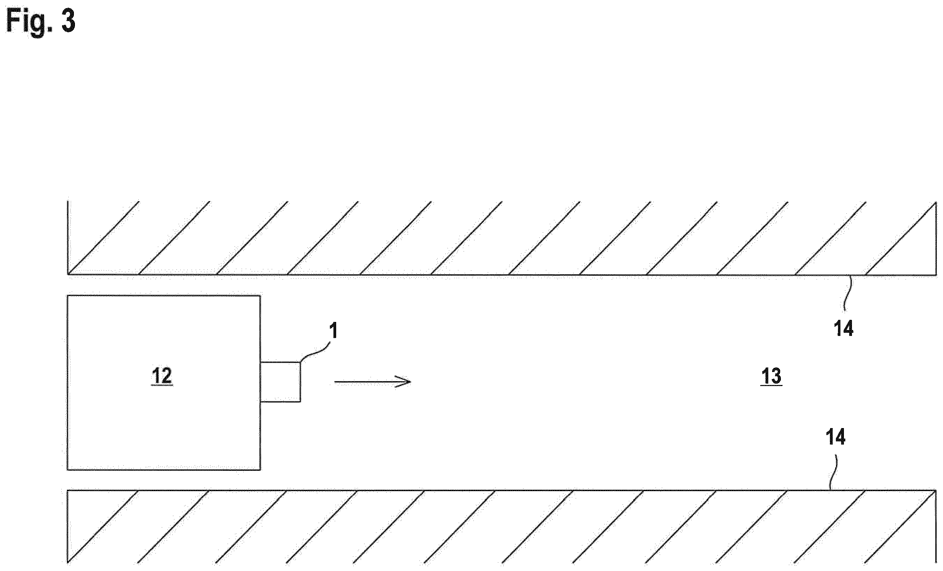

Figur 3 zeigt ein Fahrzeug 12, beispielsweise einen Schmalgang-Stapler, der, wie mit dem Pfeil veranschaulicht, sich längs einer geraden Bahn in einem Gang 13 bewegt, der beidseitig von einer Fahrbahnbegrenzung 14 begrenzt ist. Der Gang 13 ist als Schmalgang in einem Lager oder dergleichen gebildet, wobei die Breite des Gangs 13 nur geringfügig größer als die Fahrzeugbreite ist. Die Fahrbahnbegrenzungen 14 sind von Lagerplätzen für Güter, insbesondere von Regalen gebildet.

An der Frontseite des Fahrzeugs 12 ist der optische Sensor 1 gemäß Figur 1 beziehungsweise Figur 2 montiert. Die von dem optischen Sensor 1 generierten Signale werden einer nicht dargestellten Steuerung zugeführt. Mit der so ausgebildeten Sensoranordnung wird das Vorfeld des Fahrzeugs 12, das heißt der Bereich des Gangs 13 vor dem Fahrzeug 12, als Gefahrenbereich überwacht.

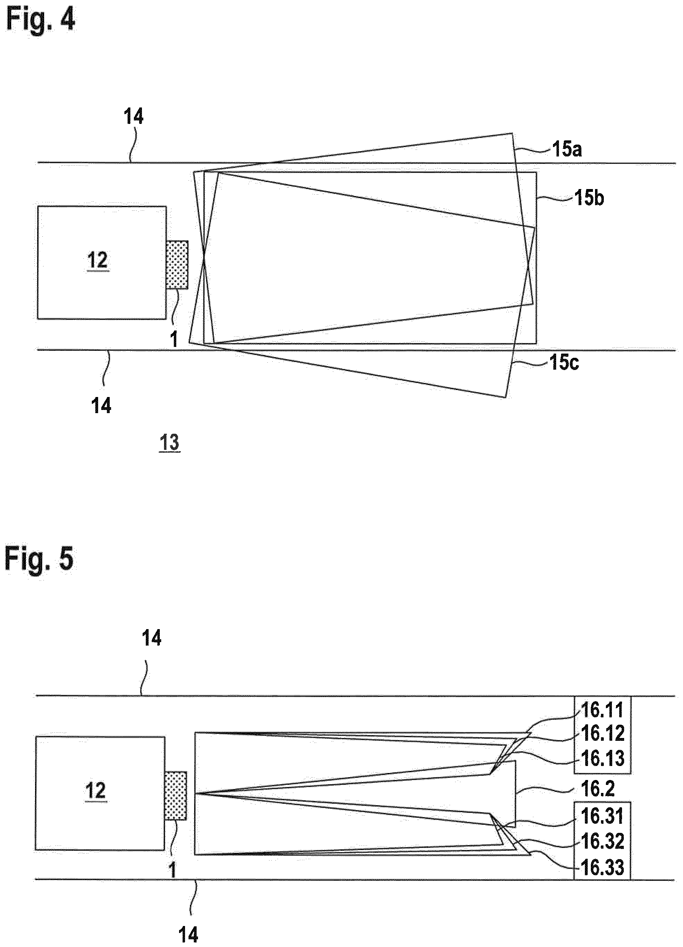

Zur Überwachung des Gefahrenbereichs führt der optische Sensor 1 wie in den Figuren 4 und 5 veranschaulicht, eine Schutzfeld-Überwachung durch. Als Ausgangssignal generiert der optische Sensor 1 ein binäres Schaltsignal, das zwei Schaltzustände aufweist. Ein erster Schaltzustand ist ein Sicherheitssignal, das als Haltsignal oder Bremssignal für das Fahrzeug 12 ausgebildet ist. Ein zweiter Schaltzustand ist ein Freigabesignal. Erhält die Steuerung des Fahrzeugs 12 das Freigabesignal, setzt das Fahrzeug 12 seine Fahrt uneingeschränkt fort.

Dabei soll ein Sicherheitssignal nur generiert werden, wenn eine Person oder ein Objekt in den Gefahrenbereich oder in den Bereich des Gangs 13 vor dem Fahrzeug 12 eintritt. Detektionen der Fahrbahnbegrenzung 14 mit dem optischen Sensor 1 sollen jedoch nicht zur Generierung des Sicherheitssignals führen. Dies wird mit der erfindungsgemäßen Schutzfeld-Überwachung erreicht, die in den Figuren 4 und 5 veranschaulicht ist.

Bei der Ausführungsform gemäß Figur 4 erfolgt mit dem optischen Sensor 1 gleichzeitig eine Objekterfassung in drei aktivierten Schutzfeldern 15a, 15b, 15c. Im vorliegenden Fall sind drei Schutzfelder 15a, 15b, 15c vorgesehen, wobei natürlich auch eine andere Zahl von Schutzfeldern möglich ist. Die Schutzfelder 15a, 15b, 15c weisen alle dieselbe rechteckige Form aus und sind teilweise überlappend fächerförmig angeordnet.

Die aktivierten Schutzfelder 15a, 15b, 15c sind, insbesondere durch Konturbestimmungen der Fahrbahnbegrenzung 14 an die Geometrie des Gangs 13 und der Fahrbahnbegrenzung 14 angepasst. Die aktivierten Schutzfelder 15a, 15b, 15c können auch abhängig vom Beladungszustand oder von der Geschwindigkeit vorgegeben werden. Die Vorgabe der aktivierten Schutzfelder 15a, 15b, 15c kann durch externe Steuersignale erfolgen, die beispielsweise in der Steuerung des Fahrzeugs 12 generiert werden können.

Wie Figur 4 und besonders deutlich Figur 3 zeigen, bewegt sich das Fahrzeug 12 im Gang 13 entlang einer geraden Bahn. Dabei können dieser Bewegung Schlingerbewegungen, das heißt Pendelbewegungen des Fahrzeugs 12 bezüglich seiner Längsachse, überlagert sein. Die fächerförmigen Schutzfelder 15a, 15b, 15c sind so gewählt, dass unabhängig davon, ob das Fahrzeug 12 zur rechten oder linken Fahrbahnbegrenzung 14 hin pendelt, immer wenigstens ein aktiviertes Schutzfeld zwar den Gefahrenbereich, also den Gang 13, nicht aber die Fahrbahnbegrenzung 14 umfasst.

In der Auswerteeinheit des optischen Sensors 1 ist eine Auswahllogik integriert, in der, abhängig von den Objekterfassungen in den Schutzfeldern 15a, 15b, 15c, wenigstens ein aktiviertes Schutzfeld 15a, 15b, 15c ausgewählt wird, um dann nur in Abhängigkeit dieses ausgewählten Schutzfeldes 15a, 15b, 15c das Schaltsignal zu generieren.

Die Auswahllogik ist im vorliegenden Fall derart ausgebildet, dass dann, wenn in wenigstens einem Schutzfeld 15a, 15b, 15c kein Objekt erkannt wird, als Schaltsignal das Freigabesignal generiert wird, da damit sicher ist, dass im Gefahrenbereich kein Objekt vorhanden ist. Dies beruht darauf, dass Schutzfelder 15a, 15b, 15c, die gegebenenfalls Objekteingriffe aufgrund der Fahrbahnbegrenzung 14 aufweisen, durch die Auswahllogik von vorneherein nicht berücksichtigt werden. Umgekehrt ist die Auswahllogik derart ausgebildet, dass dann, wenn für alle aktivierten Schutzfelder 15a, 15b, 15c Objekteingriffe registriert werden, als Schaltsignal das Sicherheitssignal ausgegeben wird, da in diesem Fall im Gefahrenbereich ein Objekt vorhanden sein muss.

Bei der Ausführungsform gemäß Figur 5 sind mehrere Teilschutzfelder 16.11, 16.12, 16.13, 16.2, 16.31, 16.32, 16.33 gleichzeitig aktiviert, so dass in all diesen Teilschutzfeldern 16.11, 16.12, 16.13, 16.2, 16.31, 16.32, 16.33 gleichzeitig Objekte mit dem optischen Sensor 1 erfasst werden.

Einzelne Teilschutzfelder 16.11, 16.12, 16.13, 16.2, 16.31, 16.32, 16.33 werden zu Logik-Schutzfeldern logisch verknüpft, die dann den ausgewählten Schutzfeldern (15a, 15b, 15c) der Ausführungsform gemäß Figur 4 entsprechen.

Die Teilschutzfelder 16.11, 16.12, 16.13, 16.2, 16.31, 16.32, 16.33 erstrecken sich nur über Teilwinkelbereiche des Gangs 13. Das zentrale Teilschutzfeld 16.2 erstreckt sich über einen Teilwinkelbereich von etwa 30°. Die Teilschutzfelder 16.11, 16.12, 16.13 befinden sich am linken Rand des Fahrzeugs 12 (in dessen Fahrtrichtung gesehen). Die Teilschutzfelder 16.31, 16.32, 16.33 befinden sich am rechten Rand des Fahrzeugs 12.

Die Auswahllogik des optischen Sensors 1 arbeitet im vorliegenden Fall derart, dass durch logische Verknüpfungen von Teilschutzfeldern 16.11, 16.12, 16.13, 16.2, 16.31, 16.32, 16.33 mehrere Logik-Schutzfelder L₁, L₂, L₃ gebildet werden. Ein erstes Logik-Schutzfeld L₁ ist durch eine Verknüpfung der Teilschutzfelder 16.11, 16.2 und 16.31 gebildet. Eine Verletzung des Logik-Schutzfeld L₁, das heißt ein Objekteingriff im Logik-Schutzfeld L₁ liegt vor, wenn entweder im Teilschutzfeld 16.11 oder im Teilschutzfeld 16.2 oder im Teilschutzfeld 16.31 ein Obj ekteingriff vorliegt.

Ein zweites Logik-Schutzfeld L₂ ist durch eine Verknüpfung der Teilschutzfelder 16.12, 16.2 und 16.32 gebildet. Eine Verletzung des Logik-Schutzfeld L₂ liegt vor, wenn entweder im Teilschutzfeld 16.12 oder im Teilschutzfeld 16.2 oder im Teilschutzfeld 16.32 ein Objekteingriff vorliegt.

Ein drittes Logik-Schutzfeld L₃ ist durch eine Verknüpfung der Teilschutzfelder 16.13, 16.2 und 16.33 gebildet. Eine Verletzung des Logik-Schutzfeld L₃ liegt vor, wenn entweder im Teilschutzfeld 16.13 oder im Teilschutzfeld 16.2 oder im Teilschutzfeld 16.33 ein Objekteingriff vorliegt.

Ein in den Gefahrenbereich eindringendes Objekt gilt nur dann als erkannt, wenn für alle drei Logik-Schutzfelder L₁, L₂, L₃ eine Verletzung registriert wird. Dann gibt der optische Sensor 1 als Schaltsignal das Sicherheitssignal aus. In allen anderen Fällen gibt der optische Sensor 1 als Schaltsignal das Freigabesignal aus.

### Bezugszeichenliste

- (1): Optischer Sensor
- (2): Gehäuse
- (3): Sendelichtstrahlen
- (4): Sender
- (5): Empfangslichtstrahlen
- (6): Empfänger
- (7): Empfangsoptik
- (8): Ablenkeinheit
- (9): Gegenstand
- (10): Meßkopf
- (11): Sockel
- (12): Fahrzeug
- (13): Gang
- (14): Fahrbahnbegrenzung
- (15a): Schutzfeld
- (15b): Schutzfeld
- (15c): Schutzfeld
- (16.2): Teilschutzfeld
- (16.11): Teilschutzfeld
- (16.12): Teilschutzfeld
- (16.13): Teilschutzfeld
- (16.31): Teilschutzfeld
- (16.32): Teilschutzfeld
- (16.33): Teilschutzfeld

- D: Drehachse

## Patentansprüche

1. Sensoranordnung mit einem optischen Sensor (1) zur Überwachung eines Gefahrenbereichs an einem Fahrzeug (12), welches entlang einer zu beiden Seiten jeweils durch eine Fahrbahnbegrenzung (14) begrenzten Fahrbahn bewegt ist, wobei der optische Sensor (1) ausgebildet ist, Objekte in wenigstens einem Schutzfeld (15a, 15b, 15c) zu erfassen und abhängig hiervon ein binäres Schaltsignal zu generieren, dessen Schaltzustände einerseits ein Sicherheitssignal und andererseits ein Freigabesignal für das Fahrzeug (12) sind, **dadurch gekennzeichnet, dass** mehrere gleichzeitig aktivierte Schutzfelder (15a, 15b, 15c) vorgesehen sind, wobei in jedem aktivierten Schutzfeld (15a, 15b, 15c) mittels des optischen Sensors (1) eine Objektdetektion erfolgt, und dass in einer Auswerteeinheit des optischen Sensors (1) eine Auswahllogik vorgesehen ist, in welcher wenigstens ein aktiviertes Schutzfeld (15a, 15, 15c) ausgewählt wird, wobei alle aktivierten Schutzfelder simultan auf eventuelle Objekteingriffe geprüft werden, jedoch nur in Abhängigkeit einer Objekterkennung in dem wenigstens einen ausgewählten Schutzfeld (15a, 15b, 15c) das Sicherheitssignal generiert wird.

2. Sensoranordnung nach Anspruch 1, **dadurch gekennzeichnet, dass** die aktivierten Schutzfelder (15a, 15b, 15c) nicht fortlaufend an die aktuelle Fahrbahnsituation angepasst werden.

3. Sensoranordnung nach Anspruch 2, **dadurch gekennzeichnet, dass** mit dem optischen Sensor (1) Messwerte von den Fahrbahnbegrenzungen (14) gewonnen werden, wobei die aktivierten Schutzfelder (15a, 15b, 15c) abhängig von den Messwerten sind.

4. Sensoranordnung nach einem der Ansprüche 1 - 3, **dadurch gekennzeichnet, dass** die aktivierten Schutzfelder (15a, 15b, 15c) abhängig vom Beladungszustand und/oder der Geschwindigkeit des Fahrzeugs (12) sind.

5. Sensoranordnung nach einem der Ansprüche 1 - 4, **dadurch gekennzeichnet, dass** eines oder mehrere aktivierte Schutzfelder (15a, 15b, 15c) als Teilschutzfelder (16.11, 16.12, 16.13, 16.2, 16.31, 16.32, 16.33) ausgebildet sind, die sich nur über einen Teilwinkelbereich der Fahrbahn erstrecken.

6. Sensoranordnung nach einem der Ansprüche 1 - 5, **dadurch gekennzeichnet, dass** sich aktivierte Schutzfelder (15a, 15b, 15c) teilweise überlappen.

7. Sensoranordnung nach einem der Ansprüche 1 - 6, **dadurch gekennzeichnet, dass** der optische Sensor (1) ein Freigabesignal generiert, falls in wenigstens einem ausgewählten Schutzfeld (15a, 15b, 15c) kein Objekteingriff vorliegt.

8. Sensoranordnung nach einem der Ansprüche 1 - 7, **dadurch gekennzeichnet, dass** mehrere aktivierte Schutzfelder (15a, 15b, 15c) zu mehreren Logik-Schutzfeldern dadurch verknüpft werden, dass Objekterkennungen in diesen aktivierten Schutzfeldern (15a, 15b, 15c) miteinander verknüpft werden.

9. Sensoranordnung nach Anspruch 8, **dadurch gekennzeichnet, dass** durch die logischen Verknüpfungen ermittelt wird, ob ein Objekteingriff in einem oder mehreren Logik-Schutzfeldern vorhanden ist oder nicht.

10. Sensoranordnung nach einem der Ansprüche 8 oder 9, **dadurch gekennzeichnet, dass** die aktivierten Schutzfelder (15a, 15b, 15c) als Teilschutzfelder (16.11, 16.12, 16.13, 16.2, 16.31, 16.32, 16.33) ausgebildet sind.

11. Sensoranordnung nach einem der Ansprüche 9 oder 10, **dadurch gekennzeichnet, dass** der optische Sensor (1) nur dann ein Freigabesignal generiert, wenn für das oder wenigstens ein Logik-Schutzfeld kein Objekteingriff vorliegt.

12. Sensoranordnung nach einem der Ansprüche 1 - 11, **dadurch gekennzeichnet, dass** das Sicherheitssignal ein Haltsignal oder ein Bremssignal für das Fahrzeug (12) ist.

13. Sensoranordnung nach einem der Ansprüche 1 - 12, **dadurch gekennzeichnet, dass** der optische Sensor (1) ein Sicherheitssensor ist.

14. Sensoranordnung nach einem der Ansprüche 1 - 13, **dadurch gekennzeichnet, dass** der optische Sensor (1) ein Flächendistanzsensor ist.

15. Verfahren zum Betrieb einer Sensoranordnung mit einem optischen Sensor (1) zur Überwachung eines Gefahrenbereichs an einem Fahrzeug (12), welches entlang einer zu beiden Seiten jeweils durch eine Fahrbahnbegrenzung (14) begrenzten Fahrbahn bewegt wird, wobei mit dem optischen Sensor (1) Objekte in wenigstens einem Schutzfeld (15a, 15b, 15c) erfasst werden und abhängig hiervon ein binäres Schaltsignal generiert wird, dessen Schaltzustände einerseits ein Sicherheitssignal und andererseits ein Freigabesignal für das Fahrzeug (12) sind, **dadurch gekennzeichnet, dass** mehrere gleichzeitig aktivierte Schutzfelder (15a, 15b, 15c) vorgesehen sind, wobei in jedem aktivierten Schutzfeld (15a, 15b, 15c) mittels des optischen Sensors (1) eine Objektdetektion erfolgt, und dass in einer Auswerteeinheit des optischen Sensors (1) eine Auswahllogik vorgesehen ist, in welcher wenigstens ein aktiviertes Schutzfeld (15a, 15b, 15c) ausgewählt wird, wobei alle aktivierten Schutzfelder simultan auf eventuelle Objekteingriffe geprüft werden, jedoch nur in Abhängigkeit einer Objekterkennung in dem wenigstens einen ausgewählten Schutzfeld (15a, 15b, 15c) das Sicherheitssignal generiert wird.

## Claims

1. A sensor assembly having an optical sensor (1) for monitoring a danger area on a vehicle (12) which is moved along a roadway bounded on both sides in each case by a roadway boundary (14), the optical sensor (1) being designed to detect objects in at least one protective field (15a, 15b, 15c) and to generate a binary switching signal as a function thereof, the switching states of which are on the one hand a safety signal and on the other hand a release signal for the vehicle (12), **characterised in that** a plurality of simultaneously activated protective fields (15a, 15b, 15c) are provided, with object detection taking place in each activated protective field (15a, 15b, 15c) by means of the optical sensor (1), and **in that** a selection logic is provided in an evaluation unit of the optical sensor (1), in which selection logic at least one activated protective field (15a, 15b, 15c) is selected, wherein all activated protective fields are simultaneously checked for possible object interference, but the safety signal is generated only in dependence on object detection in the at least one selected protective field (15a, 15b, 15c).

2. A sensor assembly according to claim 1, **characterised in that** the activated protective fields (15a, 15b, 15c) are not continuously adapted to the current road situation.

3. A sensor assembly according to claim 2, **characterised in that** measured values of the roadway boundaries (14) are obtained with the optical sensor (1), the activated protective fields (15a, 15b, 15c) being dependent on the measured values.

4. A sensor assembly according to one of claims 1 to 3, **characterised in that** the activated protective fields (15a, 15b, 15c) are dependent on the load state and/or the speed of the vehicle (12).

5. A sensor assembly according to one of the claims 1 to 4, **characterised in that** one or more activated protective fields (15a, 15b, 15c) are formed as partial protective fields (16.11, 16.12, 16.13, 16.2, 16.31, 16.32, 16.33) which extend only over a partial angular range of the roadway.

6. A sensor assembly according to one of the claims 1 to 5, **characterised in that** activated protective fields (15a, 15b, 15c) partially overlap.

7. A sensor assembly according to one of the claims 1 to 6, **characterised in that** the optical sensor (1) generates a release signal if there is no object engagement in at least one selected protective field (15a, 15b, 15c).

8. A sensor assembly according to one of claims 1 to 7, **characterised in that** a plurality of activated protective fields (15a, 15b, 15c) are linked to form a plurality of logic protective fields by linking object detections in these activated protective fields (15a, 15b, 15c) to one another.

9. A sensor assembly according to claim 8, **characterised in that** the logic operations are used to determine whether or not an object intervention is present in one or more logic protection fields.

10. A sensor assembly according to one of claims 8 or 9, **characterised in that** the activated protective fields (15a, 15b, 15c) are designed as partial protective fields (16.11, 16.12, 16.13, 16.2, 16.31, 16.32, 16.33).

11. A sensor assembly according to one of claims 9 or 10, **characterised in that** the optical sensor (1) only generates an enable signal if there is no object interference for the or at least one logic protective field.

12. A sensor assembly according to one of claims 1 to 11, **characterised in that** the safety signal is a stop signal or a brake signal for the vehicle (12).

13. A sensor assembly according to one of the claims 1 to 12, **characterised in that** the optical sensor (1) is a safety sensor.

14. A sensor assembly according to one of the claims 1 to 13, **characterised in that** the optical sensor (1) is an area distance sensor.

15. The method for operating a sensor assembly with an optical sensor (1) for monitoring a danger area on a vehicle (12) which is moved along a roadway bounded on both sides in each case by a roadway boundary (14), wherein objects in at least one protective field (15a, 15b, 15c) are detected by the optical sensor (1) and a binary switching signal is generated in dependence thereon, the switching states of which are on the one hand a safety signal and on the other hand a release signal for the vehicle (12), **characterised in that in that** a plurality of simultaneously activated protective fields (15a, 15b, 15c) are provided, with object detection taking place in each activated protective field (15a, 15b, 15c) by means of the optical sensor (1), and **in that** a selection logic is provided in an evaluation unit of the optical sensor (1), in which at least one activated protective field (15a, 15b, 15c) is selected, wherein all activated protective fields are simultaneously checked for possible object interventions, but the safety signal is generated only in dependence on an object detection in the at least one selected protective field (15a, 15b, 15c).

## Revendications

1. Agencement de capteurs comportant un capteur optique (1) pour la surveillance d'une zone dangereuse sur un véhicule (12) se déplaçant sur une chaussée délimitée des deux côtés par une limite de chaussée (14), le capteur optique (1) étant conçu pour détecter des objets dans au moins un champ de protection (15a, 15b, 15c) et pour générer en conséquence un signal de commutation binaire dont les états de commutation sont d'une part un signal de sécurité et d'autre part un signal de libération du véhicule (12), **caractérisé en ce que** plusieurs champs de protection activés simultanément (15a, 15b, 15c) sont prévus, la détection d'objets ayant lieu dans chaque champ de protection activé (15a, 15b, 15c) au moyen du capteur optique (1), et **en ce qu'**une logique de sélection est prévue dans une unité d'évaluation du capteur optique (1), logique de sélection dans laquelle au moins un champ de protection activé (15a, 15b, 15c) est sélectionné, dans laquelle tous les champs de protection activés sont contrôlés simultanément quant à une éventuelle interférence d'objets, mais le signal de sécurité n'est généré qu'en fonction de la détection d'objets dans au moins un champ de protection sélectionné (15a, 15b, 15c).

2. Agencement de capteurs selon la revendication 1, **caractérisé par le fait que** les champs de protection activés (15a, 15b, 15c) ne sont pas conçus en permanence à la situation routière courante.

3. Agencement de capteurs selon la revendication 2, **caractérisé par le fait que** les valeurs mesurées des limites de la chaussée (14) sont obtenues à l'aide du capteur optique (1), les champs de protection activés (15a, 15b, 15c) dépendant des valeurs mesurées.

4. Agencement de capteurs selon l'une des revendications 1 à 3, **caractérisé par le fait que** les champs de protection activés (15a, 15b, 15c) dépendent de l'état de charge et/ou de la vitesse du véhicule (12).

5. Agencement de capteurs selon l'une des revendications 1 à 4, **caractérisé par le fait qu'**un ou plusieurs champs de protection activés (15a, 15b, 15c) sont formés en tant que champs de protection partiels (16.11, 16.12, 16.13, 16.2, 16.31, 16.32, 16.33) qui ne s'étendent que sur une plage angulaire partielle de la chaussée.

6. Agencement de capteurs selon l'une des revendications 1 à 5, **caractérisé par le fait que** les champs de protection activés (15a, 15b, 15c) se chevauchent partiellement.

7. Agencement de capteurs selon l'une des revendications 1 à 6, **caractérisé par le fait que** le capteur optique (1) génère un signal de libération si aucun objet n'est engagé dans au moins un champ de protection sélectionné (15a, 15b, 15c).

8. Agencement de capteurs selon l'une des revendications 1 à 7, **caractérisé en ce que** plusieurs champs de protection activés (15a, 15b, 15c) sont reliés pour former plusieurs champs de protection logiques en reliant les détections d'objets dans ces champs de protection activés (15a, 15b, 15c) les uns aux autres.

9. Agencement de capteurs selon la revendication 8, **caractérisé en ce que** les opérations logiques sont utilisées pour déterminer si une intervention d'objet est présente ou non dans un ou plusieurs champs de protection logique.

10. Agencement de capteurs selon l'une des revendications 8 ou 9, **caractérisé en ce que** les champs de protection activés (15a, 15b, 15c) sont conçus comme des champs de protection partiels (16.11, 16.12, 16.13, 16.2, 16.31, 16.32, 16.33).

11. Agencement de capteurs selon l'une des revendications 9 ou 10, **caractérisé par le fait que** le capteur optique (1) ne génère un signal de validation que s'il n'y a pas d'interférence d'objet pour le champ de protection logique ou au moins un champ de protection logique.

12. Agencement de capteurs selon l'une des revendications 1 à 11, **caractérisé par le fait que** le signal de sécurité est un signal d'arrêt ou un signal de freinage pour le véhicule (12).

13. Agencement de capteurs selon l'une des revendications 1 à 12, **caractérisé par le fait que** le capteur optique (1) est un capteur de sécurité.

14. Agencement de capteurs selon l'une des revendications 1 à 13, **caractérisé par le fait que** le capteur optique (1) est un capteur de distance.

15. Procédé de fonctionnement d'un ensemble de capteurs avec un capteur optique (1) pour la surveillance d'une zone dangereuse sur un véhicule (12) qui se déplace le long d'une route délimitée des deux côtés par une limite de route (14), dans lequel les objets dans au moins un champ de protection (15a, 15b, 15c) sont détectés par le capteur optique, 15c) sont détectés par le capteur optique (1) et un signal de commutation binaire est généré en fonction de celui-ci, dont les états de commutation sont d'une part un signal de sécurité et d'autre part un signal de libération du véhicule (12), **caractérisé par le fait qu'**une pluralité de champs de protection activés simultanément (15a, 15b, 15c) sont prévus, la détection d'objet ayant lieu dans chaque champ de protection activé (15a, 15b, 15c) au moyen du capteur optique (1), et en ce qu'une logique de sélection est prévue dans une unité d'évaluation du capteur optique (1), dans laquelle au moins un champ de protection activé (15a, 15b, 15c) est sélectionné, dans lequel tous les champs de protection activés sont contrôlés simultanément pour d'éventuelles interventions d'objets, mais le signal de sécurité n'est généré qu'en fonction d'une détection d'objet dans au moins un champ de protection sélectionné (15a, 15b, 15c).
